Europäisches Patentamt

**European Patent Office**

Office européen des brevets

(19)

(11) Publication number: **0 027 339**
A2

(12) # EUROPEAN PATENT APPLICATION

(21) Application number: **80303486.7**

(22) Date of filing: **03.10.80**

(51) Int. Cl.³: **G 02 C 7/02**

(30) Priority: **11.10.79 GB 7935388**

(43) Date of publication of application:
**22.04.81 Bulletin 81/16**

(84) Designated Contracting States:
**DE FR GB IT NL**

(71) Applicant: **U.K. Wiseman Limited**
**Bittacy Hill**
**London NW7(GB)**

(72) Inventor: **Wilkinson, Peter Roland**
**31 Batchelors Way**
**Amersham Buckinghamshire(GB)**

(74) Representative: **Bernard, Alan Peter et al,**
**F.J. CLEVELAND & COMPANY 40/43 Chancery Lane**
**London WC2A 1JQ(GB)**

(54) **Progressive power ophthalmic lenses.**

(57) An opthalmic lens has a distance viewing region, a near vision region and a progressively varying optical power between these regions. The primary progression line is not umbilical i.e. the vertical power does not equal the horizontal power at all points along its length. The difference between the powers initially increases at the beginning of the progression region then the powers converge so that they are equal at a point in the near vision region.

*FIG.4*

EP 0 027 339 A2

- 2 -

## DESCRIPTION

The present invention relates in general to ophthalmic or spectacle lenses, and more particularly to lenses having a progressively varying focal power.

The ability of the human eye to adjust itself in order to focus clearly on objects at varying distances is commonly known as "accommodation". As the age of a human being increases, the power of accommodation decreases due to partial sclerosis of the crystalline lens of the eye. This defect can be corrected by the use of spectacle lenses for near vision. In order to obviate the need to remove and replace spectacles when viewing distant and near objects, bifocal lenses are commonly used. This logic may be extended to trifocals and then to lenses with a gradual variation in optical power.

A number of different designs of progressive power ophthalmic lenses are currently in use. They all suffer, to different extents, from distorted image effects. This distortion is inherent in the design of a lens with varying focal power. If the image of an object is to be magnified by different amounts when viewed through different areas of an optical lens, then it follows that a view through the whole lens must create a distorted image. In practice, this problem is not as serious as it would seem because only a small area of the spectacle lens tends to be used at any one instant.

Apart from considerations of ease of production, the difference between different designs of progressive power ophthalmic lenses is essentially concerned with ways in which distortion can be minimised from the point of view of the wearer. The two main techniques are, to spread the distortion over as large an area of the lens as possible

- 4 -

hence reducing its intensity, or, to concentrate the effects into little used areas of the lens.

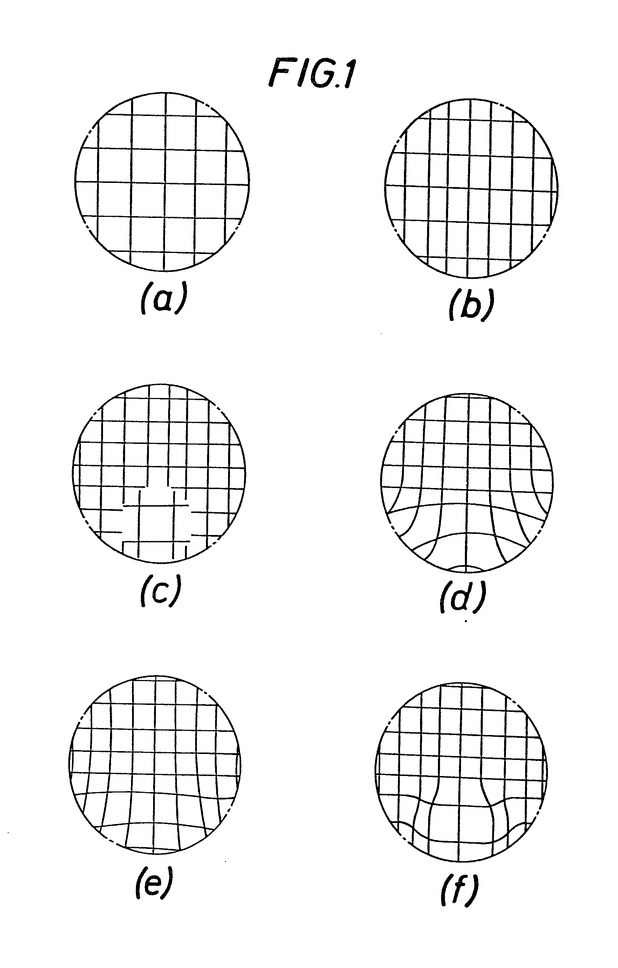

One of the most convenient ways of considering optical design effects in a progressive power lens is to study the appearance of a piece of squared graph paper when viewed through a lens. The upper three sketches (a), (b), and (c) of Figure 1 illustrate the appearance of the graph paper when viewed through spherical, toric and conventional bifocal lenses. The lower three skteches (d), (e), (f) illustrate different types of progressive power lenses. In these latter three illustrations there can be seen three different approaches to the distortion problem. In the type shown in (d) the lens form is one which is commonly described as "elephant's trunk". It is made up of circular arc cross sections which are positioned on a special central 'umbilical' line on which in this context, means that, and will hereinafter be used to mean that, at each point, the vertical curvature is equal to the cross section curvature. (This was an early type of lens where production difficulties were the prime

- 5 -

consideration). Lens type (e) is a design which is rather similar and includes a central 'umbilical' line but the horizontal cross sections are not merely circular arcs but include other conic sections (e.g. parabola, ellipse). This design improvement reduces the distortion in the lateral areas. Lens (f) illustrates the other approach to the distortion problem; to concentrate the distortion in a small area not normally used by the eye . There are obviously many variations on the three themes illustrated, such as non-vertical umbilical lines, but in general, the designs all aim to create a distance portion and a reading portion which is essentially of spherical form, at least as far as points on the central power progression line are concerned.

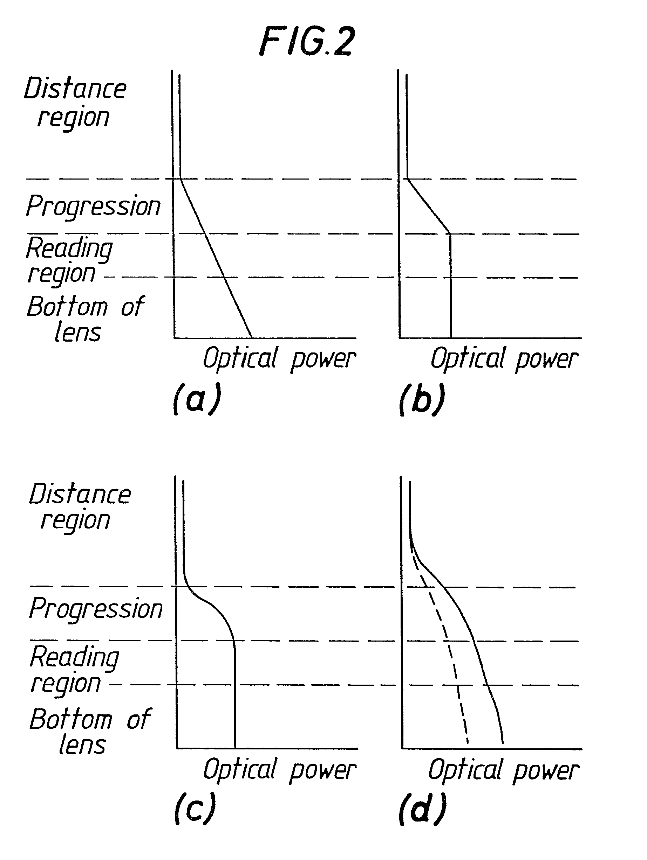

The present invention stems from a new method of deriving a specification of the distribution of refracting power over the surface of a lens. This allows greater design freedom to minimise distortion. In addition to the method of illustrating the lens in Figure 1 it is useful for an appreciation of the present invention to consider the variation of optical power along the central power progression line. Such power is directly related to the curvature of the lens at points along this line, and Figures 2(a) to (c)

- 6 -

show graphical optical power against distance down the progression line for three types of prior art lenses. Type (a) is the 'elephant's trunk' design, from which it can be seen that the optical power increases through the reading portion. Types (b) and (c) correspond generally to the lens illustrated by Figures 1(e) and 1(f). Since all three lenses have an umbilical progression line the graph can be seen as showing the optical power either in the vertical plane or the horizontal plane, since these powers are equal along the length of this line.

In UK patent specification No. 775,007 the idea is disclosed of making the horizontal curvatures different from the vertical curvatures along the centre line, with a view to reducing lateral distortion. Figure 2(d) is a graph with the same axes as those in 2(a)-(c) but illustrating the proposal in this patent specification. The dotted line represents horizontal power and the unbroken line represents vertical power. Such a proposal has not found favour in the art and those designs illustrated in Figures 2(b) and 2(c) represent the present state of the art which is firmly based on the use of an umbilical progression line. It is believed that the disadvantage of the design disclosed in the aforementioned specification is that it produces severe distortion at the central area of the near-vision region.

The present invention seeks to overcome this disadvantage.

According to the present invention there is an ophthalmic lens having a refractive surface comprising at least partly a region suited for viewing distant objects and a region suited for viewing near objects,

the surface of the lens having a primary progression line extending between the two regions along which the optical power varies smoothly increasing in a direction towards the near vision region,

and over at least part of the length of the primary progression line, the difference between the optical power measured on the progression line in a first plane which is at or between the vertical plane and the plane locally parallel to the primary progression line and the optical power measured in a second plane orthogonal to the first through the same point increases when measured in corresponding first and second planes for points along the primary progression line in the direction from the distance vision region to the near vision region, and the rate of increase of this difference reduces when measured at further of said points in that direction.

It should be understood that the term 'vertical' refers to the vertical direction when the lens is in its intended position with respect to a wearer's eye.

Embodiments of the invention will now be described, by way of example only, with reference to Figures 3 to 5 of the accompanying drawings.

Figure 3 is a schematic plan view of areas of a progressive power lens;

Figure 4 is a graph of optical power/distance down the primary progression line

Figure 5 is a view of a squared pattern as viewed through the lens illustrated by Figure 4;

Figure 6 is a schematic plan view of areas of a further progressive power lens; and

Figure 7 is a view of a squared pattern as viewed through the lens of Figure 6.

In the following it is assumed that the lens is to be produced in the conventional manner, where the additional reading power segment of the lens is formed by a special shape of the front surface of a piece of optical glass and a later operation on the back surface of the lens will provide the distance vision power. However, it is envisaged that other alternatives are possible, for example, other optical material or combination of materials may be used, the special surface may be on the back surface of the lens, or any other method of lens construction may be used, including the use of moulding techniques using materials other than glass.

As previously stated, a convenient way of studying the optical effect of a progressive power lens is to study the appearance of squared graph paper when viewed through the lens. The converse of this is true also, that is from a picture of the appearance of squared graph paper with known object and image distances the corresponding lens surface can be calculated. A design technique can be based on this method, by beginning with a desired appearance of squared graph paper, i.e., one in which distortion is minimised, and then computing the corresponding lens surface.

However, there is one major difficulty with this mathematical technique. The drawings of the 'distorted image' graph paper carry more information than is necessary to calculate the lens surface shape. This over-specification means that it is possible to calculate a physically unrealisable surface. A mathematical technique has been derived which allows a partial relaxation of the specification so that the results create a physically real surface. This technique is described below.

- 10 -

Considering one small square on the drawing of the 'distorted image' graph paper in relation to the undistorted graph paper, it is possible to calculate various factors. The most convenient is to relate the mean vertical and horizontal magnifications to the optical power of the lens surface at that point and hence from the refractive index value to calculate the local curvature. (Note that the height or slope of the surface at that point are not yet known). In mathematical notation the curvature are specified as

$$\frac{\partial^2 h}{\partial x^2} \quad \text{and} \quad \frac{\partial^2 h}{\partial y^2} \quad \text{where} \quad h \text{ is}$$

the surface height from some datum and x and y are orthogonal axes.

Now consider that at every point on the lens surface the following relationship must be true:-

$$\frac{\partial}{\partial y^2} \left( \frac{\partial^2 h}{\partial x^2} \right) = \frac{\partial}{\partial x^2} \left( \frac{\partial^2 h}{\partial y^2} \right)$$

By replacing the orthogonal curvatures with a mean value $\phi$ and a discrepancy value $\psi$ then

$$\frac{\partial^2 \phi}{\partial x^2} - \frac{\partial^2 \phi}{\partial y^2} = \frac{\partial^2 \psi}{\partial x^2} + \frac{\partial^2 \psi}{\partial y^2}$$

Now if the astigmatic curvature $\psi$ is specified for all points in the x - y plane then the value of $\nabla^2 \psi$ is known and the equation above reduces to a hyperbolic inhomogeneous partial differential equation, a solution of which is

$$2\phi_M = \phi_P + \phi_Q + \int_Q^P \left( \frac{\partial \phi}{\partial x} - \frac{\partial \psi}{\partial x} \right) dy$$

$$+ \int_Q^P \left( \frac{\partial \phi}{\partial y} + \frac{\partial \psi}{\partial y} \right) dx + \int_Q^M \left( \frac{\partial \psi}{\partial x} - \frac{\partial \psi}{\partial y} \right) dx + \int_P^M \left( \frac{\partial \psi}{\partial x} + \frac{\partial \psi}{\partial y} \right) dx$$

This solution is for a point M on the surface and is calculated from two points P and Q on lines at 45 degrees to the x axis. The solution starts from some special line, not necessarily straight and at any convenient position on, or off, the lens surface. The relaxation technique, which has been applied, to this mathematical solution, is
that although the distorted image drawing produces
values of $\phi$ and $\psi$ all over the surface, both of
these are only used on the arbitrarily chosen special
line. Over the remainder of the surface only the
values of $\psi$ obtained from the drawing are used. The
method calculates new values of $\phi$ for which a physic-
ally real surface exists. By double integration of
the curvature values it is possible to create values
of surface slope and height at all points on the lens
surface. The method described above has been programmed for an electronic computer using finite
element techniques. The calculations proceed as
described above until a large number of height values
are obtained which describe the surface form on the
basis of a regular finite element grid.

The calculated surface must now be translated into reality, and two of the best methods of
achieving this are by the use of numerical control
machinery. One method is to use a numerical controlled milling machine to cut a piece of metal. In
this case, the preferred method is to use a fairly large spherical cutter which is moved in accordance with the grid-height values previously calculated, with an additional correction for the size and inclination of the cutter. The second method is to cut directly into glass, or similar material. In this case, the preferred method is a diamond cutting wheel which can be tilted in addition to being translated.

The production methods described provide either a master shape for subsequent copying directly or indirectly into an optical material, or a mould to be used directly or indirectly to produce optical lenses, or produce directly the required lens.

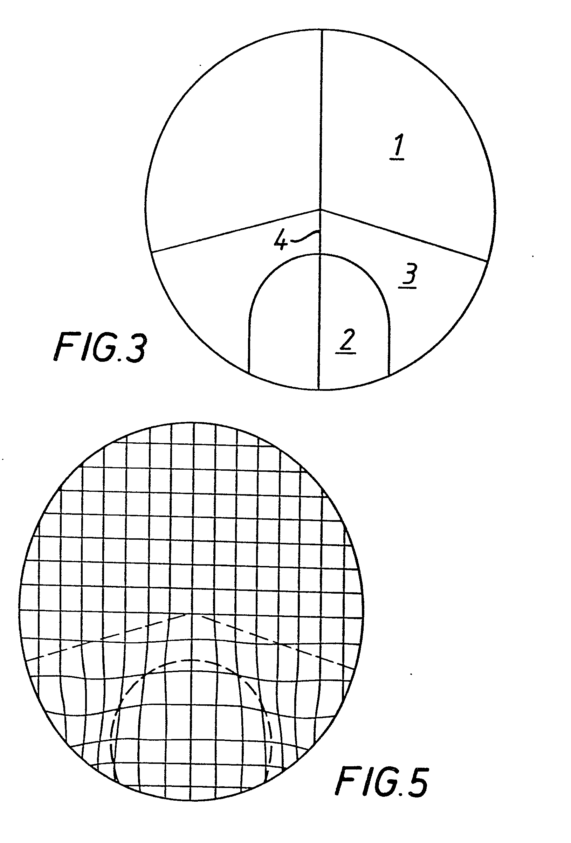

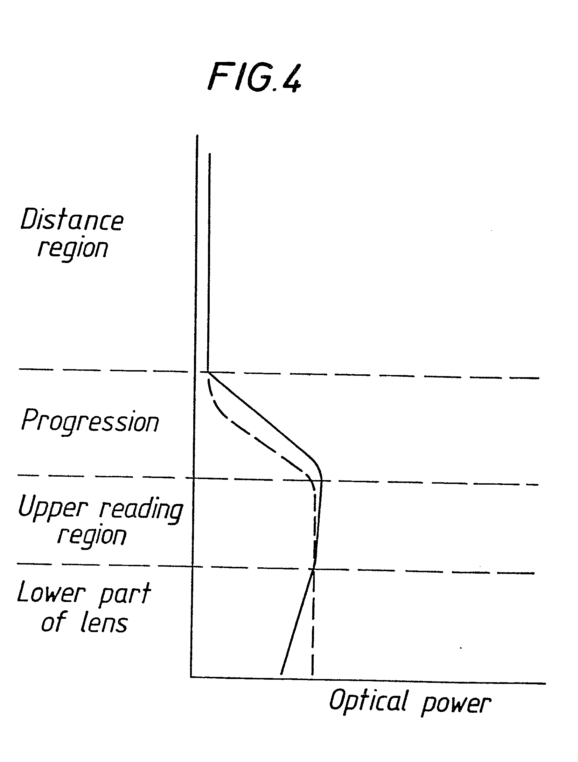

Use of the above mentioned technique has enabled a range of improved lenses to be designed. One example of these will now be described with reference to Figures 3 and 4. The lens does not have an umbilical line (as defined earlier), nor need it have any spherical regions or any cross sections of simple geometrical form.

Referring to Figure 3 an ophthalmic lens has a distance viewing region 1 which occupies the upper half of the lens and is spherical. The lens also has a near vision portion 2 which is located at the lower part of the lens and is arch-shaped. Between the regions 1 and 2 is a transitional region 3 through which the optical power of the lens increases from the low powered distance portion 1 to the higher powered reading portion 2. The centre points of the two regions 1 and 2 are connected by a line along which the focal power of the lens varies. This primary progression line is preferably the line followed by the direction of the eye pupil as a user moves his eye between those centre points. For convenience the line will be considered straight and represented by the line 4 in Figure 3. The progressive increase in curvature, and hence vertical focal power, along this line varies smoothly between the two regions.

The reading vision region 2 extends about a continuation of the primary progression line 4. The width of the region is decided by the condition that it should provide a field of view sufficiently wide to eliminate head rotation under normal reading conditions.

Figure 4 illustrates graphical the variation of vertical and horizontal power along the primary progression line. Referring to that figure, it will be seen that at the upper end of the progression region, the horizontal and vertical powers both increase, but the vertical power at a greater rate, so that a difference between the powers occurs and this difference increases in a direction along the line towards the near vision region.

Along the line through the progression region this divergence decreases and subsequently the vertical and horizontal powers begin to converge until at a point in the upper portion of the near vision region they are relatively similar. Through the near vision region the horizontal power slightly increases and the vertical power slightly decreases until they become equal at a lower point in the near vision region. The vertical power decreases more sharply after the cross-over so that at the bottom of the lens the vertical and horizontal powers diverge in magnitude. Part of this region may be cut off during the normal edging process. Manufacture is thereby made easier and a more flatter lens profile obtained.

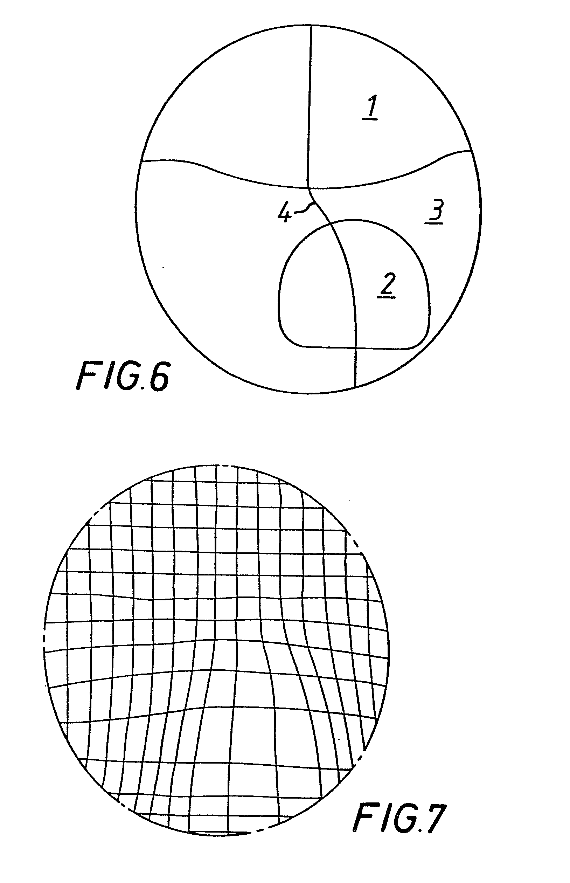

Figure 5 shows the appearance of squared graph paper through a lens of the general form illustrated by Figure 4. Referring now to Figure 5, the effects of the difference between vertical and lateral powers along the primary progression line is to make the squares of the graph paper appear rectangular through the reading and transition portions of the lens. It is well known that if a spherical lens is viewed at an angle an astigmatic effect is produced. With the large lens sizes now more frequently used advantage is taken of flatter base curves, requiring the user to view through the reading portion at an appreciable angle. The difference between vertical and transverse powers alleviates the resultant astigmatic effect. In the reading region the comparative reduction in the transverse optical power also allows a greater width of usable lens whilst the comparative increase in vertical power maintains the required magnification. This can be seen most clearly by comparison with Figures 1(d) to (f). The variation between the orthogonal powers, as described, also allows a smoother transition region to be constructed so that objectionable distortion in lateral areas to either side of the reading portion, is reduced. This may again be seen by a comparison with Figures 1(d) to (f) which all show more 'skew' type distortion signified particularly by angled vertical lines. It is this type of distortion the users find most objectionable.

In the above described embodiment the vertical power is considered parallel to the progression line. However, in its position in a spectacle frame the primary progression line may be angled by several degrees to the vertical. The orthogonal powers referred to and their relative variation may still be considered with respect to the progression line and such tilt is in general tolerable. However the orthogonal planes may be considered with respect to the true vertical, to make the lens non-symmetrical.

A non-symmetrical embodiment of the invention is the lens illustrated by Figures 6 and 7. The design has a curved division line between the distance and transition regions, it has an increase in optical power within the reading region and a reduction in optical power below the reading region but it still retains the essential feature of a progression line along which the optical powers measured in vertical and horizontal directions are not identical.

It will also be appreciated that all features of the wearer's ophthalmic prescription may be included into this new design by incorporation into the calculations.

CLAIMS

1. An ophthalmic lens having a refractive surface comprising at least partly a region suited for viewing distant objects and a region suited for viewing near objects,

the surface of the lens having a primary progression line extending between the two regions along which the optical power varies smoothly, increasing in a direction towards the near vision region,

and over at least part of the length of the primary progression line, the difference between the optical power measured on the progression line in a first plane which is at or between the vertical plane and the plane locally parallel to the primary progression line and the optical power measured in a second plane orthogonal to the first through the same point increases when measured in corresponding first and second planes for points along the primary progression line in the direction from the distance vision region to the near vision region, and the rate of increase of this difference reduces when measured at further of said points in that direction.

2.        An ophthalmic lens as claimed in claim 1 wherein at further points along the primary progression line in a direction towards the near vision region the difference in optical powers in respective pairs of said first and second planes through the points decreases.

3.    .    An opthalmic lens as claimed in claim 1 or claim 2 wherein at a point on the continuation of the primary progression line in the general region near the lower part of the near vision region the optical powers measured at the respective first and second planes through the point are equal.

4.        An ophthalmic lens as claimed in anyone of claims 1 to 3 wherein the optical powers measured at points in the near vision region on the continuation of the primary progression line through the near vision region and in said orthogonal planes are, at least over the major part of the  region, not equal.

5.        An ophthalmic lens as claimed in claim 3 or claim 4 wherein the region between the distance vision region and near vision region, the optical power measured at points in said primary progression line in said first plane is greater than that measured in the second plane through the same point.

6.     An ophthalmic lens as claimed in claim 4 or claim 5 wherein said optical powers measured in said second plane at points on the continuation of the primary progression line in the near vision region are substantially constant throughout that region.

7.     An ophthalmic lens as claimed in any one of the preceding claims wherein close to the lower edge of the lens the optical power in said first plane at points on the continuation line decreases at points increasing in distance from the distance vision region.

8.     An ophthalmic lens as claimed in any one of the preceding claims wherein the distance vision region is axisymmetric in shape.

9.     An ophthalmic lens as claimed in any one of the preceding claims wherein, in addition to said variation in optical power the remainder of the ophthalmic prescription of an intended wearer is incorporated into the power distribution in the lens.

10.     An ophthalmic lens as claimed in claim 8 wherein the distance region is limited by lines extending from the primary progression line in directions sloping towards the near vision region.

- 21 -    **0027339**

11.    An ophthalmic lens as claimed in claim 8 wherein the boundary of the distance vision region is curved substantially as shown in Figure 4 of the accompanying drawings.

12.    An ophthalmic lens as claimed in any one of the preceding claims wherein the primary progression line is curved such that lens surface is nonsymmetrical.

FIG.1

(a)

(b)

(c)

(d)

(e)

(f)

# FIG.2

Distance region

Progression

Reading region

Bottom of lens

Optical power

(a)

(b)

(c)

(d)

0027339

FIG.3

FIG.5

FIG.4

Distance region

Progression

Upper reading region

Lower part of lens

Optical power

FIG.6

FIG.7